(19) Europäisches Patentamt / European Patent Office / Office européen des brevets

(11) **EP 2 418 367 A1**

(12) **EUROPEAN PATENT APPLICATION**

(43) Date of publication:
**15.02.2012 Bulletin 2012/07**

(51) Int Cl.:
*F02C 7/18* (2006.01)    *F02C 3/13* (2006.01)
*F01D 5/18* (2006.01)

(21) Application number: **11177033.5**

(22) Date of filing: **09.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.08.2010  IT MI20101527**

(71) Applicant: **Ansaldo Energia S.p.A.**
**Genova (IT)**

(72) Inventors:
• **Silingardi, Andrea**
  **16146 Genova (IT)**
• **Piola, Stefano**
  **16042 Carasco (IT)**
• **Astrua, Pio**
  **16137 Genova (IT)**

(74) Representative: **Jorio, Paolo et al**
**Studio Torta S.p.A.**
**Via Viotti, 9**
**10121 Torino (IT)**

(54) **Cooling assembly and method for a gas-turbine electric power generating plant and gas-turbine electric power generating plant comprising said cooling assembly**

(57)    A cooling assembly (10) for a gas-turbine electric power generating plant (1), equipped with a gas turbine (2) having at least one array (12) of stator blades (13) and with a compressor (3), comprising:
- a cooling circuit (28) for cooling the array (12) of stator blades (13) of the gas turbine (2), which comprises at least one manifold (32a, 32b, 32c) and a plurality of conduits (33) connected to the manifold (32a, 32b, 32c) and arranged at least partly inside respective stator blades (13);
- a compressed-air extraction circuit (29), which draws at least one flow of compressed air from the compressor (3) and feeds it to the cooling circuit (28);
- a cooling fluid feed circuit 30, which is configured to add at least a first flow rate (Q1, Q2, Q3) of cooling fluid to the flow of drawn-off compressed air to cool it, and comprises a control unit (44) configured to calculate the first flow rate (Q1, Q2, Q3) of cooling air on the basis of at least a first parameter (TT) related to a temperature of the gas turbine (2), and on the basis of at least a second parameter (TC, Po, Pi) related to a temperature of the flow of compressed air drawn from the compressor (3) by means of the compressed-air extraction circuit (29).

Fig 1

EP 2 418 367 A1

## Description

The present invention relates to a cooling assembly and to a cooling method for a gas-turbine electric power generating plant and to a gas-turbine electric power generating plant comprising said cooling assembly.

Over the last few years, the need has been increasingly felt to increase the efficiency of gas-turbine plants, whether or not with a combined cycle. The most promising way to increase the efficiency of the plant consists in increasing the temperature of the gases inside the gas turbine. However, increasing the inlet temperature is limited by the materials with which the turbine blades are made.

Currently, it is known to apply ceramic-based heat barriers on the blades; however such barriers are only effective if combined with an adequate internal cooling plant of the blades themselves.

The internal cooling of the blades is performed by taking advantage of air drawn from the compressor at a temperature within 350°C-450°C. Such temperatures are not always sufficient to ensure adequate cooling of the blades.

Solutions which use heat exchangers are known, aiming to lower the temperature of the cooling air drawn from the compressor. However, such solutions determine increased losses of pressure, especially at the heat exchangers where the need to have large heat-exchange surfaces involves the use of long tube groups which cause high losses of load. Such losses determine a penalization of the overall performances of the plant and, in certain cases, are such as to obligate additional compression devices to be inserted with apparent wastes of energy. The extraction of increased air flow rates from the compressor and the cooling with heat exchanger also involve significant engineering complications, due to the increased number and cost of the external devices required for the cooling and to the plant modifications required to position such additional components.

Moreover, techniques exist which propose cooling the air drawn from the compressor by means of water-injection.

An example of this technique is described in document US 2003/0035717.

However, none of these techniques regulates the water flow rate introduced into the cooling circuit to optimize the cooling of the gas-turbine blades.

Thus, it is an object of the present invention to provide a cooling assembly for a gas-turbine electric power generating plant capable of simply and effectively optimizing the cooling of the gas-turbine blades.

In accordance with such objects, the present invention relates to a cooling assembly for a gas-turbine electric power generating plant; the plant comprising a gas turbine equipped with at least one array of stator blades and a compressor; the cooling assembly comprising:

- a cooling circuit for cooling the array of stator blades of the gas turbine, which comprises at least one manifold and a plurality of conduits connected to the manifold and located at least partly inside respective stator blades;
- a compressed-air extraction circuit, which draws at least one flow of compressed air from the compressor, and feeds it to the cooling circuit;
- a cooling fluid feed circuit, which is configured to add at least a first flow rate of cooling fluid to the drawn-off flow of compressed air to cool it;
  the cooling assembly being characterized in that the cooling fluid feed circuit comprises a control unit, which is configured to calculate the first flow rate of cooling fluid on the basis of at least a first parameter related to a temperature of the gas turbine, and on the basis of at least a second parameter related to a temperature of the flow of air drawn from the compressor through the compressed-air extraction circuit.

It is a further object of the present invention to provide a cooling method for a gas-turbine electric power generating plant capable of optimizing the cooling of the gas-turbine blades while being simple and affordable.

In accordance with such objects, the present invention relates to a cooling method for a gas-turbine electric power generating plant; the plant comprising a gas turbine equipped with at least one array of stator blades and a compressor; the method comprising the steps of:

- cooling the array of stator blades of the gas turbine by means of a cooling circuit comprising at least one manifold and a plurality of conduits connected to the manifold and located at least partly inside the respective stator blades;
- drawing at least one flow of compressed air from the compressor;
- feeding the flow of compressed air to the cooling circuit;
- adding at least a first flow rate of cooling fluid to the flow of compressed air to cool it;
  the method being characterized in that it comprises the step of calculating the first flow rate of cooling fluid on the basis of at least a first parameter related to a temperature of the gas turbine, and on the basis of at least a second parameter related to a temperature of the flow of compressed air drawn from the compressor.

It is a further object of the invention to provide a gas-turbine electric power generating plant in which the gas-turbine blades are optimally cooled.

In accordance with such objects, the present invention relates to a gas-turbine electric power generating plant comprising a gas turbine equipped with at least one array of stator blades and a compressor; the plant being characterized in that it comprises a cooling assembly 10 according to any one of the claims from 1 to 12.

Further features and advantages of the present invention will become more apparent from the following description of a non-limiting embodiment thereof, with reference to the figures of the accompanying drawings, in which:

- figure 1 is a diagrammatic view of the electric power generating plant according to the present invention;
- figure 2 is a diagrammatic view of a detail of the cooling assembly according to the present invention.

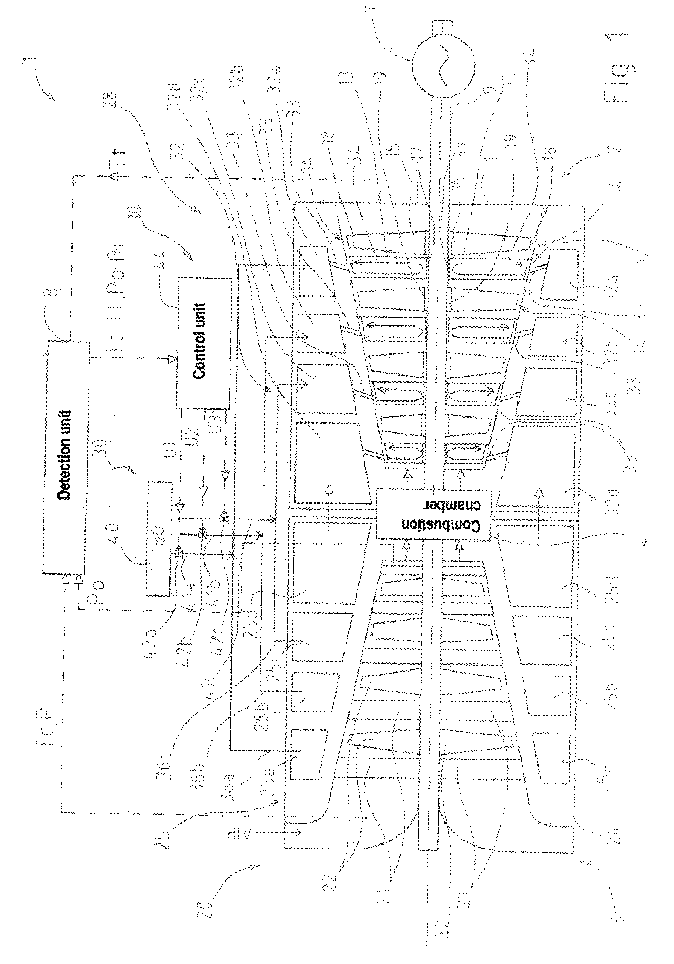

Reference numeral 1 in figure 1 indicates a gas-turbine electric power generating plant.

Plant 1 comprises a gas turbine 2 which extends along an axis A, a compressor 3, a combustion chamber 4, a generator 7, a detecting unit 8 and a cooling assembly 10.

The gas turbine 2 and compressor 3 are mounted on one same shaft 11, which rotates about axis A and is connected to generator 7, which transforms the mechanical power supplied by the gas turbine 2 into emitted electric power.

The gas turbine 2 comprises an outer casing 11, a plurality of arrays 12 of stator blades 13 and a plurality of arrays 14 of rotor blades 15, which follow each other along axis A.

In the non-limiting example herein described and shown, there are four arrays 12 and four arrays 14.

Each array 12 of stator blades 13 comprises a plurality of stator blades 13 arranged radially with respect to axis A and coupled at the ends with an inner ring 17 and an outer ring 18, respectively. The inner ring 17 and the outer ring 18 are fixed and are centered on axis A.

Each array 14 of rotor blades 15 comprises a plurality of rotor blades 15 arranged radially with respect to axis A and coupled at an end with a rotor ring 19, which is centered on axis A and is movable about axis A.

Compressor 3 is preferably a multi-step axial compressor. In particular, compressor 3 extends along axis A and comprises an air intake 20, a plurality of stator blades 21 and of rotor blades 22, an outer casing 24 and a plurality of annular extraction chambers 25 (diagrammatically depicted in figure 1), which follow each other along axis A and contain compressed air from compressor 3 at various steps of compression. The annular extraction chambers 25 are centered on axis A and extend inside the outer casing 24 about the stator blades 21 and the rotor blades 22.

In the non-limiting example herein described and shown, there are four annular extraction chambers 25 and are indicated with reference numbers 25a, 25b, 25c, 25d. Starting from the air intake 20 up to the compressor outlet 3, the annular extraction chambers 25a, 25b, 25c, 25d respectively contain compressed air at increasing steps of compression. The pressure levels at which the air is extracted from compressor 3 depend on the plant model 1 and its operating conditions and thus are greatly variable. In the non-limiting case shown in the accompanying figures, the annular extraction chambers 25a, 25b, 25c draw air from the 5th, from the 9th, and from the 13th step, respectively. Under basic load operating conditions, the air pressures in the annular extraction chambers 25a, 25b, 25c are 5, 9 and 15 bar, respectively.

The detection unit 8 is in communication with a plurality of sensors (not shown) of plant 1 and detects a series of parameters relating to plant 1. In particular, the detection unit 8 detects the temperature of the gases $T_T$ at the exhaust of the gas turbine 2, the temperature of air $T_c$ at the air intake 20 of compressor 3, and the pressure of the air inlet $P_i$ into compressor 3 and the pressure of the air at the outlet $P_o$ of compressor 3.

The cooling assembly 10 comprises a cooling circuit 28, a compressed-air extraction circuit 29 and a cooling fluid feed circuit 30.

The cooling circuit 28 comprises at least one manifold 32 and a plurality of conduits 33 connected to manifold 32, which comprise a portion 34 arranged inside the respective stator blades 13. The portions 34 inside the stator blades 13 are diagrammatically depicted with an arrow in figure 1. It is understood that the path followed by portion 34 of conduit 33 inside each stator blade 13 may vary depending on the particular cooling needs.

In the non-limiting example herein described and shown, there are four manifolds (one for each array 12 of stator blades 13) and they are indicated with the reference numbers 32a, 32b, 32c, 32d.

The compressed-air extraction circuit 29 is configured to draw at least one flow of air from compressor 3 and feed it to the cooling circuit 28.

In particular, the compressed-air extraction unit 29 comprises three extraction lines 36a, 36b, 36c, which connect the annular extraction chambers 25a, 25b and 25c with the respective manifolds 32a, 32b and 32c of the cooling circuit 28.

In order for the compressed air to flow from the annular extraction chambers 25a, 25b and 25c to the respective manifolds 32a, 32b and 32c, the pressure ratio between the annular extraction chambers 25a, 25b and 25c and the respective manifolds 32a, 32b and 32c (extraction/injection ratio) must be greater than a threshold value equal to at least approximately 1.05.

Thus the annular extraction chambers 25 with a higher pressure (those closest to the outlet of compressor 3) will be connected to the manifolds 32 with a higher pressure (those closest to the inlet of the gas turbine where the temperatures of the gases are higher).

The extraction lines 36a, 36b and 36c are arranged outside the outer casing 11 and the outer casing 24.

In the non-limiting example herein described and shown, the annular extraction chamber 25d and manifold 32d are fluidly connected inside the outer casing 11 and the outer casing 24 and do not require a specific outer extraction line. Indeed, the air flows out from the exhaust diffuser of the compressor and fills the space delimited by the outer casing 11 (annular extraction chamber 25d) and continues in the space delimited by the outer casing 24 (manifold 32d).

A non-illustrated variant provides that the annular extraction chamber 25d and manifold 32d are separated and communicating by means of a specific extraction line.

The cooling fluid feed circuit 30 comprises a tank 40 adapted to contain cooling fluid, three injection lines 41a, 41b, 41c equipped with respective regulating valves 42a, 42b, 42c and a control unit 44 configured to control the regulating valves 42a, 42b, 42c.

Preferably, the cooling fluid is water. It is understood that any liquid may be used, which is capable of evaporating thus removing the latent evaporation heat from the air extraction temperatures.

The injection lines 41a, 41b, 41c connect tank 40 with the respective extraction lines 36a, 36b and 36c of the compressed-air extraction circuit 29.

Preferably, the injection lines 41a, 41b, 41c end at the coupling with the respective extraction lines 36a, 36b and 36c, with one or more nozzles (not shown in the accompanying figures) to promote the atomization of the cooling fluid in contact with the high-temperature air coming from compressor 3.

A non-illustrated variant of the present invention provides that the injection lines 41a, 41b, 41c connect tank 40 directly with the respective manifolds 32a, 32b and 32c. Also in this case, the injection lines 41a, 41b, 41c will end with one or more nozzles. Preferably, the nozzles will be arranged equally spaced apart in a circumferential manner so as to homogenously inject cooling fluid inside the related manifold 32.

The control unit 44 is configured to control the regulating valves 42a, 42b, 42c so that they feed the respective extraction lines 36a, 36b and 36c with a respective flow rate of cooling fluid Q1, Q2 and Q3.

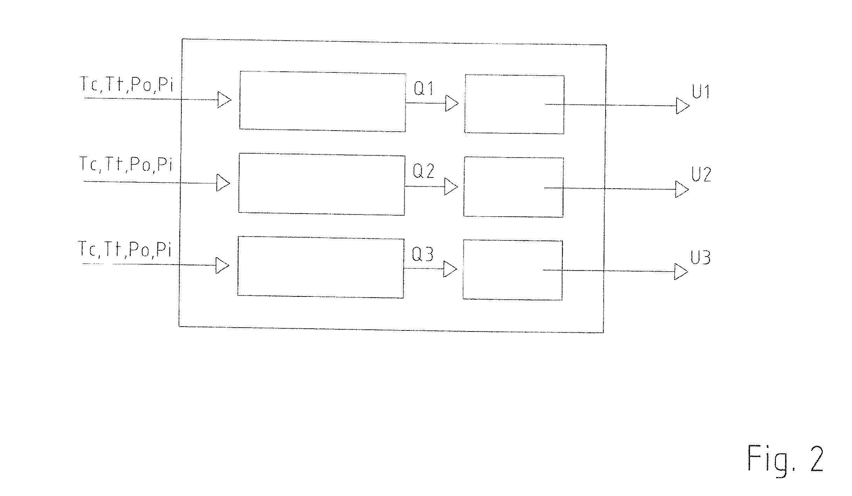

With reference to figure 2, the control unit 44 comprises a first calculating module 46a of the flow rate Q1 to be fed by means of the first regulating valve 42a, a second calculating module 46b of the flow rate Q2 to be fed by means of the second regulating valve 42b, a third calculating module 46c of the flow rate Q3 to be fed by means of the third regulating valve 42c, and a first, a second and a third control module 47a, 47b, 47c.

The first calculating module 46, the second calculating module 47 and the third calculating module 48 are fed with the parameters detected by the detection unit 8 (temperature of air $T_c$ at the air intake 20 of compressor 3, pressure of the air inlet $P_i$ into compressor 3 and pressure of the air at the outlet $P_o$ of compressor 3, and temperature of the gases $T_G$ at the exhaust of the gas turbine 2).

On the basis of the data input $T_c$ $P_i$ $P_o$ $T_G$, the first calculating module 46, the second calculating module 47 and the third calculating module 48 provide the flow rate values Q1, Q2 and Q3, respectively.

Preferably, the flow rate values Q1, Q2 and Q3 are calculated on the basis of the data input $T_c$ $P_i$ $P_o$ $T_G$ by means of a first-order polynomial function.

In particular, the flow rate values Q1, Q2 and Q3 are calculated in accordance with the following formulas:

$$Q1 = a_1 T_C + b_1 P_i / P_o + c_1 T_G$$

$$Q2 = a_2 T_C + b_2 P_i / P_o + c_2 T_G$$

$$Q3 = a_3 T_C + b_3 P_i / P_o + c_3 T_G$$

where a1, a2, a3, b1, b2, b3, c1, c2, c3 are coefficients previously determined, for example, experimentally.

A non-illustrated variant of the present invention provides that the flow rate values Q1, Q2 and Q3 are calculated on the basis of predetermined maps. For example, the flow rate values Q1, Q2 and Q3 may be calculated by using a map on the basis of an evaporation model capable of calculating the flow rate Q1, Q2 and Q3 to be injected into the respective manifold 32a, 32b and 32c on the basis of the temperature of the air along the respective extraction line 36a, 36b and 36c. The temperature of the air along the respective extraction line 36a, 36b and 36c is estimated by means of thermo-fluid dynamic calculations. Alternatively, the flow rate values Q1, Q2 and Q3 may be calculated using a map on the basis of psychrometric diagrams, on the thermo-dynamic calculation of the air-liquid mixture and on the basis of the temperature of the air detected along the respective extraction lines 36a, 36b and 36c. The flow rate Q1, Q2 and Q3 thus calculated is the one that results in mixture saturation and hence, the one that maximizes the cooling.

A second non-illustrated variant of the present invention provides that the detection unit 8 detects the temperature of the air extracted from the annular extraction chambers 25a, 25b and 25c, instead of the temperature of air $T_C$ at the air intake 20 of compressor 3, of the pressure of the air inlet $P_i$ into compressor 3 and of the pressure of the air at the outlet $P_o$ of compressor 3. Such a temperature may be detected, for example, by means of sensors arranged along the extraction lines 36a, 36b and 36c close to compressor 3. In such a case, the flow rate values Q1, Q2 and Q3 will be calculated on the basis of the temperature data of the extracted air detected on the extraction lines 36a, 36b and 36c and on the basis of the temperature of the gases $T_G$ at the exhaust of the gas turbine 2, respectively, for example by means of a first-order polynomial function.

The first, the second and the third control module 47a, 47b, 47c are configured to determine respective control signals U1, U2, U3 to be sent to the respective regulating valves 42a, 42b, 42c on the basis of the respective flow rates Q1, Q2 and Q3.

Advantageously, the control of the flow rate of the cooling fluid injected through the cooling fluid feed circuit 30 makes the cooling of the stator blades 13 of the gas turbine 2 more efficient, thus avoiding useless wastes.

Indeed, the optimization of the injected flow rate of cooling fluid allows a savings in terms of flow rate of compressed air drawn from compressor 3, with apparent advantages in terms of specific flow rate and of performance of plant 1.

Moreover, the optimization of the injected flow rate of cooling fluid determines an increase of the useful life of the stator blades 13 of the gas turbine 2 and a subsequent reduction of the maintenance costs.

Furthermore, the cooling assembly 10 may be installed to any gas-turbine plant already operating. Indeed, the installation of the cooling assembly 10 does not require invasive interventions on the components of plant 1 and the control unit 44 uses parameters of plant 1 which are regularly detected for other purposes.

Lastly, it is apparent that modifications and variants may be made to the cooling assembly 10, to the cooling method and to plant 1 herein described without departing from the scope of the appended claims.

**Claims**

1. A cooling assembly (10) for a gas-turbine electric power generating plant (1); the gas-turbine electric power generating plant (1) comprising a gas turbine (2) with at least one array (12) of stator blades (13); and a compressor (3);
   the cooling assembly (10) comprising:

   - a cooling circuit (28) for cooling the array (12) of stator blades (13) of the gas turbine (2), and which comprises at least one manifold (32a, 32b, 32c), and a plurality of conduits (33) connected to the manifold (32a, 32b, 32c) and located at least partly inside respective stator blades (13);
   - a compressed-air extraction circuit (29), which draws at least one flow of compressed air from the compressor (3), and feeds it to the cooling circuit (28); and
   - a cooling fluid feed circuit (30), which adds at least a first flow rate (Q1, Q2, Q3) of cooling fluid to the drawn-off flow of compressed air to cool it;
   the cooling assembly (10) being **characterized in that** the cooling fluid feed circuit (30) comprises a control unit (44), which calculates the first flow rate (Q1, Q2, Q3) of cooling fluid on the basis of at least a first parameter ($T_T$) related to a temperature of the gas turbine (2), and on the basis of at least a second parameter ($T_c$, $P_o$, $P_i$) related to a temperature of the flow of compressed air drawn from the compressor (3) by the compressed-air extraction circuit (29).

2. A cooling assembly as claimed in Claim 1, wherein the first parameter ($T_T$) related to a temperature of the gas turbine (2) is the gas temperature detected at the exhaust of the gas turbine (2).

3. A cooling assembly as claimed in Claim 1 or 2, wherein the second parameter ($T_c$, $P_o$, $P_i$) related to a temperature of the flow of compressed air drawn from the compressor (3) by the compressed-air extraction circuit (29) comprises a detected temperature of the flow of compressed air drawn off by the compressed-air extraction circuit (29).

4. A cooling assembly as claimed in any one of Claims 1 to 3, wherein the control unit (44) id configured to calculate the first flow rate (Q1, Q2, Q3) of cooling fluid on the basis of a third parameter related to a temperature of the flow of compressed air drawn from the compressor (3) and of a fourth parameter related to a temperature of the flow of compressed air drawn from the compressor (3); the second parameter being an air temperature ($T_c$) detected at the inlet of the compressor (3), the third parameter being a first air pressure ($P_i$) detected at the inlet of the compressor (3), and the fourth parameter being a second air pressure ($P_o$) detected at the outlet of the compressor (3).

5. A cooling assembly as claimed in any one of the foregoing Claims, wherein the feed circuit (30) comprises a tank (40) of cooling fluid; and at least one injection line (41a, 41b, 41c) fitted with a respective regulating valve (42a, 42b, 42c) controlled by the control unit (44) to supply at least a first flow rate (Q1, Q2, Q3) of cooling fluid.

6. A cooling assembly as claimed in Claim 5, wherein the injection line (41a, 41b, 41c) connects the tank (40) to the compressed-air extraction circuit (29).

7. A cooling assembly as claimed in Claim 5, wherein the injection line (41a, 41b, 41c) connects the tank (40) to the respective manifold (32a, 32b, 32c) of the cooling circuit (28).

8. A cooling assembly as claimed in any one of Claims 5 to 7, wherein the injection line (41a, 41b, 41c) comprises one or more end nozzles.

9. A cooling assembly as claimed in any one of the foregoing Claims, wherein the compressed-air extraction circuit (29) comprises at least one extraction line (36a, 36b, 36c) connecting the compressor (3) to a respective manifold (32a, 32b, 32c) of the cooling circuit (28).

10. A cooling assembly as claimed in Claim 9, wherein the extraction line (36a, 36b, 36c) extends outside a first outer casing (24) of the compressor (3), and a second outer casing (11) of the gas turbine (2).

11. A cooling assembly as claimed in any one of the foregoing Claims, wherein the control unit (44) is configured to calculate the first flow rate (Q1, Q2, Q3) by means of a first-order polynomial function.

12. A cooling assembly as claimed in any one of Claims 1 to 10, wherein the control unit is configured to calculate the first flow rate (Q1, Q2, Q3) by means of at least one predetermined map.

13. A method of cooling a gas-turbine electric power generating plant (1) comprising a gas turbine (2) with at least one array (12) of stator blades (13); and a compressor (3);

the method comprising the steps of :

- cooling the array (12) of stator blades (13) of the gas turbine (2) by means of a cooling circuit (28) comprising at least one manifold (32a, 32b, 32c), and a plurality of conduits (33) connected to the manifold (32a, 32b, 32c) and located at least partly inside respective stator blades (13);
- drawing at least one flow of compressed air from the compressor (3);
- feeding the flow of compressed air to the cooling circuit (28) ; and
- adding at least a first flow rate (Q1, Q2, Q3) of cooling fluid to the flow of compressed air to cool it;

the method being **characterized by** comprising the step of calculating the first flow rate (Q1, Q2, Q3) of cooling fluid on the basis of at least a first parameter $(T_T)$ related to a temperature of the gas turbine (2), and on the basis of at least a second parameter $(T_c, P_o, P_i)$ related to a temperature of the flow of compressed air drawn from the compressor (3).

14. A method as claimed in Claim 13, wherein the first parameter $(T_T)$ related to a temperature of the gas turbine (2) is a gas temperature detected at the exhaust of the gas turbine (2).

15. A method as claimed in Claim 13 or 14, wherein the second parameter $(T_c, P_o, P_i)$ related to a temperature of the flow of compressed air drawn from the compressor (3) by the compressed-air extraction circuit (29) comprises a detected temperature of the flow of compressed air drawn off by the compressed-air extraction circuit (29).

16. A method as claimed in any one of Claims 13 to 15, wherein the step of calculating the first flow rate (Q1, Q2, Q3) comprises calculating the first flow rate (Q1, Q2, Q3) of cooling fluid on the basis of a third parameter related to a temperature of the flow of compressed air drawn from the compressor (3) and of a fourth parameter related to a temperature of the flow of compressed air drawn from the compressor (3) and of a fourth; the second parameter being an air temperature $(T_c)$ detected at the inlet of the compressor (3), the third parameter being a first air pressure $(P_i)$ detected at the inlet of the compressor (3), and the fourth parameter being a second air pressure $(P_o)$ detected at the outlet of the compressor (3).

17. A gas-turbine electric power generating plant comprising a gas turbine (2) with at least one array (12) of stator blades (13); and a compressor (3); the plant (1) being **characterized by** comprising a cooling assembly (10) as claimed in any one of Claims 1 to 12.

Detection unit

Control unit

Combustion chamber

Fig. 1

Fig. 2

Europäisches
Patentamt
European
Patent Office
Office européen
des brevets

## EUROPEAN SEARCH REPORT

**Application Number**

EP 11 17 7033

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 487 863 B1 (CHEN ALLEN G [US] ET AL) 3 December 2002 (2002-12-03) | 1,3,5-7, 9-13,15, 17 | INV. F02C7/18 F02C3/13 F01D5/18 |
| Y | * column 1, line 65 - line 67; figures 1,2 | 2,8,14 | |
| A | * * column 2, line 28 - line 38 * * column 3, line 1 - line 5 * * column 3, line 45 - line 56 * * column 4, line 27 - line 48 * * column 5, line 10 - line 58 * ----- | 4,16 | |
| X | EP 1 806 478 A2 (GEN ELECTRIC [US]) 11 July 2007 (2007-07-11) | 1,13 | |
| Y | * paragraphs [0005], [0011], [0012], | 8 | |
| A | [0013], [0017], [0019], [0020], [0021], [0025] * ----- | 2-7, 9-12, 14-17 | |
| Y | US 2004/221584 A1 (HOFFMANN JURGEN [CH] ET AL HOFFMANN JUERGEN [CH] ET AL) 11 November 2004 (2004-11-11) | 2,14 | TECHNICAL FIELDS SEARCHED (IPC) |
| A | * paragraphs [0006], [0007], [0017], [0020], [0023], [0024], [0033], [0035]; figures 1,2 * ----- | 1,13 | F01D F02C |

The present search report has been drawn up for all claims

| Place of search | Date of completion of the search | Examiner |
|---|---|---|
| The Hague | 27 October 2011 | Herbiet, J |

**ANNEX TO THE EUROPEAN SEARCH REPORT
ON EUROPEAN PATENT APPLICATION NO.**

EP 11 17 7033

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2011

| Patent document cited in search report | | Publication date | Patent family member(s) | | Publication date |
|---|---|---|---|---|---|
| US 6487863 | B1 | 03-12-2002 | NONE | | |
| EP 1806478 | A2 | 11-07-2007 | CN | 101092907 A | 26-12-2007 |
| | | | JP | 2007182884 A | 19-07-2007 |
| | | | US | 2007157626 A1 | 12-07-2007 |
| US 2004221584 | A1 | 11-11-2004 | EP | 1442203 A1 | 04-08-2004 |
| | | | WO | 03038255 A1 | 08-05-2003 |
| | | | US | 6523346 B1 | 25-02-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030035717 A